# EUROPÄISCHE PATENTSCHRIFT

(11) **EP 3 289 261 B1**
(45) Veröffentlichungstag und Bekanntmachung des Hinweises auf die Patenterteilung: **09.10.2019**
(21) Anmeldenummer: 16721627.4
(22) Anmeldetag: 07.04.2016
(51) Int. Cl.: F16K 39/06, F16K 5/20

(54) **REGELVENTIL ZUR REGELUNG EINES FLUIDFLUSSES**
CONTROL VALVE FOR CONTROLLING A FLUID FLOW
VANNE DE RÉGULATION DE L'ÉCOULEMENT D'UN FLUIDE

(30) Priorität: 27.04.2015 DE 102015207619
(43) Veröffentlichungstag der Anmeldung: 07.03.2018
(73) Patentinhaber: Schaeffler Technologies AG & Co. KG, 91074 Herzogenaurach (DE)
(72) Erfinder: HURST, Sebastian, 91074 Herzogenaurach (DE)
(86) Internationale Anmeldenummer: PCT/DE2016/200173
(87) Internationale Veröffentlichungsnummer: WO 2016/173592

(56) Entgegenhaltungen:
- EP-A1- 0 547 381
- EP-A2- 1 258 662
- DE-A1-102009 025 360
- DE-C2- 2 556 729
- US-A- 3 484 078

## Beschreibung

Die Erfindung betrifft ein Regelventil zur Regelung eines Fluidflusses, insbesondere eines Kühlmittelflusses in einem Kühlmittelkreislauf einer Brennkraftmaschine, umfassend ein Ventilelement, das mit zumindest einem Durchbruch ausgestattet und relativ zu einem Ventilgehäuse bewegbar ist, wobei der Durchbruch durch Bewegung des Ventilelements in Überdeckung mit einem seitens des Ventilgehäuses definierten Leitungsquerschnitt bringbar ist, um ein Strömen von Fluid zu ermöglichen, und wobei ein Dichtelement vorgesehen ist, das am Ventilgehäuse den Leitungsquerschnitt radial umgebend aufgenommen und an einer Dichtfläche mit einer Oberfläche des Ventilelements unter Überbrückung eines Spalts in Kontakt bringbar ist, der sich zwischen der Oberfläche des Ventilelements und dem Ventilgehäuse im Bereich des Dichtelements erstreckt.

Aus der DE 10 2009 025 360 A1 geht ein Regelventil hervor, das ein quer zu einem Ventilgehäuse verschiebbares Ventilelement mit einem Durchbruch umfasst. Dabei kann dieses Ventilelement mit seinem Durchbruch durch entsprechende Verschiebung in Überdeckung mit einem Leitungsquerschnitt des Ventilgehäuses gebracht werden, um ein Strömen von Fluid aus dem Leitungsquerschnitt zu ermöglichen. Im Bereich des Leitungsquerschnitts ist das Ventilgehäuse zudem mit einem Dichtelement versehen, das mit einer Dichtfläche an eine Oberfläche des Ventilgliedes andrückt und dabei eine Abdichtung eines sich zwischen der Oberfläche des Ventilelements und dem Ventilgehäuse erstreckenden Spalts vornimmt.

Weitere Absperr- bzw. Drehschieberventile sind bekannt aus DE 101 24 323 C1, DE 10 2010 026 368 A1, EP 0 547 381 A1, DE 25 56 729 C2, DE 28 18 935 A1 und GB 2 352 494 B.

Ein gattungsgemäßes Regelventil ist aus der US 3,484,078 A bekannt.

Ausgehend vom vorstehend beschriebenen Stand der Technik ist es nun die Aufgabe der vorliegenden Erfindung, ein Regelventil zu schaffen, das sich über seinen Arbeitsbereich durch möglichst geringe Reibverluste auszeichnet.

Diese Aufgabe wird ausgehend vom Oberbegriff des Anspruchs 1 in Verbindung mit dessen kennzeichnenden Merkmalen gelöst.

Gemäß der Erfindung umfasst ein Regelventil ein Ventilelement, das mit zumindest einem Durchbruch ausgestattet ist und relativ zu einem Ventilgehäuse bewegt werden kann. Dabei kann der Durchbruch durch Bewegung des Ventilelements in Überdeckung mit einem seitens des Ventilgehäuses definierten Leitungsquerschnitt gebracht werden, um ein Strömen von Fluid zu ermöglichen. Des Weiteren ist ein Dichtelement vorgesehen, das am Ventilgehäuse den Leitungsquerschnitt radial umgebend aufgenommen ist und an einer Dichtfläche mit einer Oberfläche des Ventilelements unter Überbrückung eines Spalts in Kontakt gebracht werden kann, wobei sich der Spalt zwischen der Oberfläche des Ventilelements und dem Ventilgehäuse im Bereich des Dichtelements erstreckt.

Eine Regelung des jeweiligen Fluidflusses erfolgt also über das Regelventil durch entsprechende Positionierung des Durchbruchs zum Leitungsquerschnitt, da erst ab einer Überschneidung des Durchbruchs mit dem Leitungsquerschnitt ein Durchströmen des Ventilelements mit dem Fluid über den Durchbruch ermöglicht wird. Ein Volumenstrom an Fluid wird dabei über den Grad der Überschneidung des Durchbruchs mit dem Leitungsquerschnitt geregelt, wobei ein maximaler Volumenstrom bei vollständiger Freigabe des Leitungsquerschnitts durch das Ventilelement darstellbar ist. Bei dem Leitungsquerschnitt kann es sich im Bereich des Regelventils um einen Zulauf oder auch einen Ablauf für Fluid handeln. Das Fluid kann also ab Überschneidung von Durchbruch und Leitungsquerschnitt aus diesem über den Durchbruch ausströmen oder über den Durchbruch in den Leitungsquerschnitt einströmen. Insbesondere im letztgenannten Fall kann sich ein Ablauf dann aber auch noch zu mehreren Leitungen aufzweigen.

Das Dichtungselement ist seitens des Ventilgehäuses aufgenommen und umschließt den Leitungsquerschnitt radial, d.h. das Dichtelement umgibt den Leitungsquerschnitt quer zu einer Strömungsrichtung des Fluids, um eine Mündung des Leitungsquerschnitts bei Anlage des Dichtelements an der Oberfläche des Ventilelements entsprechend gegenüber einer Umgebung abzudichten. Insofern ist das Dichtelement bevorzugt als ringförmige oder hohlzylindrische Dichtung ausgeführt, die mit einer kreisförmigen Dichtfläche an der Oberfläche des Ventilelements zur Anlage kommen kann. Die Abdichtung findet dabei dadurch statt, dass das Dichtelement einen Spalt überbrückt, der zwischen der Oberfläche des Ventilelements und dem Ventilgehäuse im Bereich des Dichtelements vorherrscht und ansonsten ein ungewolltes Zu- oder Abströmen von Fluid ermöglichen würde.

Das Ventilelement kann zur Einstellung der Überschneidung des Durchbruchs mit dem Leitungsquerschnitt gezielt zu dem Ventilgehäuse bewegt werden. Diese Bewegung kann dabei als translatorische oder aber auch als rotatorische Bewegung vorliegen, wobei das Ventilelement im letztgenannten Fall dann bevorzugt mit einer kugelähnlichen Oberfläche ausgeführt ist.

Das Regelventil ist bevorzugt Teil eines Kühlmittelkreislaufs einer Brennkraftmaschine und dient hier der Verteilung eines bereitgestellten Volumenstroms an Kühlmittel an die relevanten Wärmequellen und -senken. Alternativ dazu kann ein erfindungsgemäßes Regelventil aber auch in einem Ölkreislauf einer Brennkraftmaschine oder aber auch in einem anderen Bereich, wie beispielsweise im Bereich der Flugzeuge, Landmaschinen, Stationäranwendungen, etc., Anwendung finden.

Die Erfindung umfasst nun die technische Lehre, dass sich die Erstreckung des Spalts in Abhängigkeit der Bewegung des Ventilelements zum Ventilgehäuse verändert und dass sich im Bereich der Überdeckung des Durchbruchs mit dem Leitungsquerschnitt eine maximale Erstreckung des Spalts einstellt, bei der das Dichtelement mit seiner Dichtfläche von der Oberfläche des Ventilelements abgehoben ist. Mit anderen Worten variiert also ein Abstand zwischen der Oberfläche des Ventilelements und dem Ventilgehäuse im Bereich des Dichtelements je nach Stellung des Durchbruchs zum Leitungsquerschnitt, wobei im Bereich einer Überdeckung ein maximaler Abstand zwischen Ventilgehäuse und Oberfläche des Ventilelements vorherrscht, bei welchem maximalen Abstand das Dichtelement nicht mehr an seiner Dichtfläche mit der Oberfläche des Ventilelements in Kontakt steht.

Eine derartige Ausgestaltung eines Regelventils hat den Vorteil, dass bei fehlender Anlage des Dichtelements an der Oberfläche des Ventilelements Reibungsverluste beim Bewegen des Ventilelements entfallen, die ihre Ursache ansonsten in dem Abgleiten des Dichtelements an der Oberfläche des Ventilelements haben. Insofern können über den Arbeitsbereich des Regelventils auftretende Reibmomente insgesamt verringert werden, was den Wirkungsgrad des Regelventils entsprechend verbessert. Dadurch, dass das Abheben des Dichtelements von der Oberfläche des Ventilelements in den Bereich der Überschneidung des Durchbruchs mit dem Leitungsquerschnitt gelegt ist, bei dem also ein Ein- oder Ausströmen von Fluid in bzw. aus dem Leitungsquerschnitt erwünscht ist, ist die dann entfallende Abdichtung über das Dichtelement unproblematisch. Die Reduzierung von Reibmomenten wird also gezielt in einen Bewegungsbereich des Ventilelements zum Ventilgehäuse gelegt, in dem keine Abdichtung über das Dichtelement zu erfolgen hat.

Im Fall der DE 10 2009 025 360 A1 liegt das Dichtelement hingegen permanent mit seiner Dichtfläche an der Oberfläche des Ventilelements an, so dass bei der Querverschiebung des Ventilelements zum Ventilgehäuse stets eine gewisse Reibung aufgrund des Kontakts zwischen Dichtelement und Ventilelement auftritt. Dementsprechend sind Reibverluste dieses Regelventils über den Arbeitsbereich gesehen erhöht.

Wesentlich für die Erfindung ist, dass sich eine Erstreckung des Spalts in Abhängigkeit der Position des Ventilelements zum Ventilgehäuse verändert, wobei im Bereich der Überdeckung von Durchbruch und Leitungsquerschnitt ein maximaler Wert der Erstreckung erreicht wird, bei dem das Dichtelement nicht mehr an der Oberfläche des Ventilelements anliegen kann. Abseits der Überdeckung liegt dann aber eine Erstreckung des Spalts vor, bei der das Dichtelement mit seiner Dichtfläche an der Oberfläche des Ventilelements anliegt und somit für die Abdichtung sorgt.

Entsprechend einer Ausführungsform der Erfindung ist die Veränderung der Erstreckung des Spalts durch eine ungleichmäßige Gestaltung der Oberfläche des Ventilelements verwirklicht, indem auf einem Grundkörper des Ventilelements abseits des Durchbruchs eine zusätzliche, eine Abmessung des Ventilelements in Richtung des Ventilgehäuses vergrößernde Kontur aufgesetzt ist. Die Variation des sich zwischen Ventilgehäuse und Ventilelement einstellenden Spalts ist also seitens des Ventilelements durch eine entsprechende Gestaltung der Oberfläche realisiert.

Gemäß einer weiteren Ausgestaltungsmöglichkeit der Erfindung ist die Oberfläche des Ventilelements als Kugeloberfläche oder als Teil einer Kugeloberfläche gestaltet. In Weiterbildung dieser Ausgestaltungsmöglichkeit in Kombination mit der vorhergehenden Ausführungsform liegt der Grundkörper dann als erste Kugel oder als Teil einer ersten Kugel vor, auf der bzw. auf dem die Kontur in Form eines Teils einer zweiten Kugel aufgesetzt ist. Hierdurch kann die sich ändernde Oberfläche des Ventilelements auf zuverlässige Art und Weise realisiert werden. Die im Bereich des Durchbruchs vorzunehmende Aussparung der Kontur kann dabei durch entsprechende mechanische Bearbeitung eines kugelförmigen Grundkörpers verwirklicht sein.

Es ist eine weitere Ausführungsform der Erfindung, dass Übergänge zwischen unterschiedlichen Abmessungen des Ventilelements in Richtung des Ventilgehäuses jeweils über Rampen gestaltet sind. Hierdurch kann ein entsprechender Übergang geschaffen werden, so dass ein Verkanten und Verklemmen des Dichtelements beim Wechsel zwischen der Anlage am Ventilelement und dem Abheben vom Ventilelement zuverlässig unterbunden wird.

Erfindungsgemäß ist der Leitungsquerschnitt durch einen Stutzen des Ventilgehäuses definiert. Dabei fungiert dieser Stutzen als Zu- oder Ablauf für das Fluid. Der Stutzen und ein weiterer Teil des Ventilgehäuses definieren einen zwischenliegenden Raum, in dem ein das Dichtelement in Richtung des Ventilelements vorspannendes Federelement aufgenommen ist. Dabei ist zudem ein mechanischer Anschlag für das Dichtelement vorgesehen, der das Dichtelement bei Vorliegen der maximalen Erstreckung des Spalts an einer Anlage an der Oberfläche hindert. Über das Federelement wird also abseits der Überdeckung von Durchbruch und Leitungsquerschnitt stets eine zuverlässige Anlage und damit Abdichtung des Dichtelements am Ventilelement gewährleistet, wobei mit Vorliegen der maximalen Erstreckung des Spalts das Dichtelement durch den Anschlag an einem weiteren Verschieben in Richtung der Oberfläche und der dortigen Anlage gehindert wird.

Erfindungsgemäß ist der Durchbruch im Ventilelement bevorzugt als Langloch gestaltet, so dass ein entsprechender Überschneidungsbereich im Zuge der Bewegung des Ventilelements zum Ventilgehäuse definiert werden kann. In Weiterbildung der Erfindung sind die Rampen jeweils beidseitig des Langlochs vorgesehen, wobei auf eine geringere Abmessung des Ventilelements reduzierende Rampen ab Beginn einer Überschneidung des Langlochs mit dem Leitungsquerschnitt bis zur vollständigen Freigabe des Leitungsquerschnitt verlaufen, während auf eine größere Abmessung des Ventilelements vergrößernde Rampen ab Ende der vollständigen Freigabe des Leitungsquerschnitts durch das Langloch bis zum Ende der Überschneidung des Langlochs mit dem Leitungsquerschnitt verlaufen. Hierdurch werden geeignete Übergänge für das Abheben des Dichtelements von der Oberfläche des Ventilelements sowie auch dessen anschließend wiedererfolgende Anlage geschaffen.

Erfindungsgemäß sollte ein Überschneidungsbereich des Durchbruchs mit dem Leitungsquerschnitt in Bewegungsrichtung des Ventilelements zum Ventilgehäuse ausreichend groß sein, so dass sich ein entsprechender Bereich im Zuge der Bewegung des Ventilelements zum Ventilgehäuse einstellt, in dem das Dichtelement von der Oberfläche abgehoben ist.

Eine vorteilhafte Ausführungsform der Erfindung, die nachfolgend erläutert wird, ist in den Zeichnungen dargestellt. Es zeigt:
- Figur 1: eine schematische Draufsicht auf ein Regelventil;
- Figur 2: eine schematische Schnittdarstellung des Regelventils aus Figur 1 mit abgewickeltem Umfang eines Ventilelements und
- Figur 3: eine weitere Schnittdarstellung des Regelventils der Erfindung, gezeigt in einer zu den Figuren 1 und 2 abweichenden Stellung.

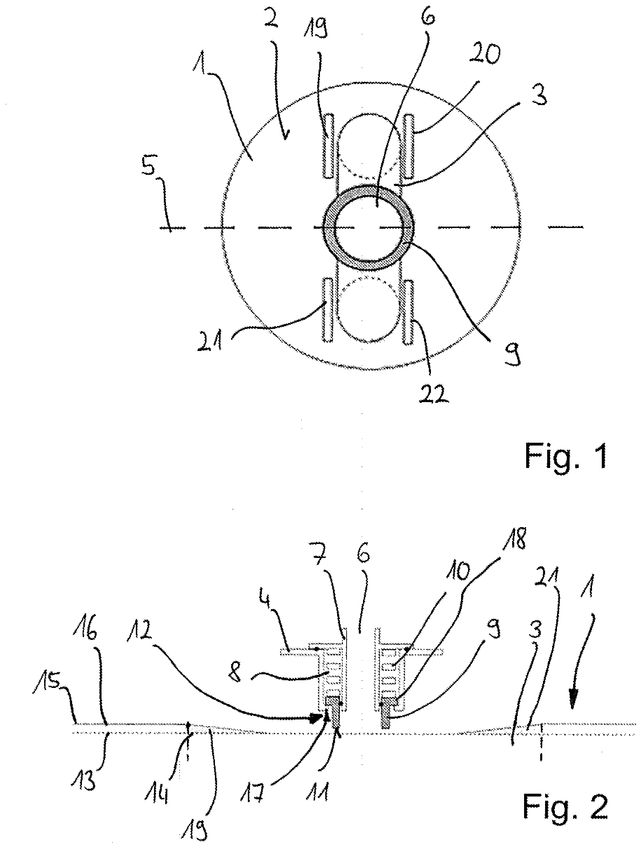

Figur 1 zeigt eine schematische Draufsicht eines Regelventils, das zur Regelung eines Fluidflusses Anwendung findet. Hierbei ist dieses Regelventil insbesondere für die Verwendung in einem Kühlmittelkreislauf einer Brennkraftmaschine gedacht, um hier einen Volumenstrom an Kühlmittel völlig oder auch nur teilweise abzudrosseln bzw. an die relevanten Wärmequellen und -senken zu verteilen. Generell kann das erfindungsgemäße Regelventil aber auch Anwendung in sonstigen Fluidkreislaufen finden, wie beispielsweise einem Ölkreislauf einer Brennkraftmaschine.

Wie zu erkennen ist, umfasst das Regelventil ein Ventilelement 1, das mit einer kugelähnlichen Oberfläche 2 ausgestattet ist, die in einem Bereich mit einem Durchbruch in Form eines Langlochs 3 durchsetzt ist. Über das Langloch 3 wird ein zum Ventilelement 1 umliegender Bereich mit einem - vorliegend nicht zu sehenden - Innenbereich des Ventilelements 1 verbunden, der mit Fluid gespeist werden kann. Insofern fungiert der Innenbereich des Ventilelements 1 als Zulauf für Fluid.

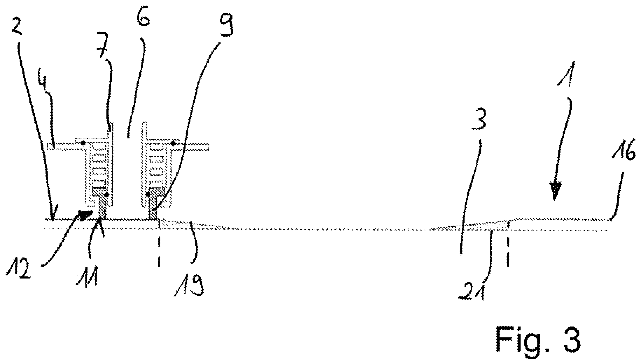

Das Ventilelement 1 kann durch entsprechende Aktuierung relativ zu einem in den Figuren 2 und 3 zu sehenden Ventilgehäuse 4 bewegt werden, indem das Ventilelement 1 um eine in Figur 1 dargestellte Rotationsachse 5 rotiert wird. Entsprechend der Bewegung des Ventilelements 1 zum Ventilgehäuse 4 wird dabei das Langloch 3 in Überdeckung mit einem Leitungsquerschnitt 6 gebracht, der durch einen Stutzen 7 des Ventilgehäuses 4 definiert ist und einen Ablauf für das Fluid bildet. Der Stutzen 7 ist in den Figuren 2 und 3 jeweils zu sehen.

Wie in Figur 2 und auch in Figur 3 zu erkennen ist, schließen der Stutzen 7 und der übrige Teil des Ventilgehäuses 4 einen zwischenliegenden Raum 8 ein, in dem ein hohlzylindrisches Dichtelement 9 verschiebbar geführt ist. Das Dichtelement 9 umgibt den Leitungsquerschnitt 6 radial und ist über ein ebenfalls im Raum 8 aufgenommenes Federelement 10 in Richtung der Oberfläche des Ventilelements 1 vorgespannt. Bei Anlage des Dichtelements 9 mit einer ringförmigen Dichtfläche 11 an der Oberfläche 2 des Ventilelements 1 wird der Übergang des Leitungsquerschnitts 6 zum Ventilelement 1 gegenüber einem Spalt 12 abgedichtet, der zwischen der Oberfläche 2 des Ventilelements 1 und dem Ventilgehäuse 4 im Bereich des Dichtelements 9 vorherrscht.

Als Besonderheit ist nun die Oberfläche 2 des Ventilelements 1 ungleichmäßig gestaltet, wie anhand von Figur 2 und auch Figur 3 zu erkennen ist, in denen jeweils ein Umfang der Oberfläche 2 abgewickelt dargestellt ist. Dies ist dadurch erreicht, dass auf einen eine erste Abmessung 13 definierenden, kugelförmigen Grundkörper 14 eine Kontur 15 aufgesetzt ist, die eine zweite Abmessung 16 definiert und als Teil einer weiteren Kugel vorliegt. Dabei ist die Kontur 15 im Bereich des Langlochs 3 ausgespart, so dass sich die Oberfläche im Bereich des Langlochs 3 von der Abmessung 16 auf die Abmessung 13 reduziert. Dies hat bei der jeweiligen Positionierung des Ventilelements 1 mit seiner Oberfläche 2 zum Ventilgehäuse 4 auch eine entsprechende Veränderung des Spalts 12 zur Folge.

In den Figuren 1 und 2 ist das Ventilelement 1 relativ zum Ventilgehäuse 4 in eine Position gebracht, in der der Leitungsquerschnitt 6 vollständig mit dem Langloch 3 überdeckt. In dieser Position soll ein vollständiger Fluidfluss zwischen Zu- und Ablauf stattfinden, so dass in diesem Bereich eine Abdichtung des Spalts 12 durch das Dichtelement 9 nicht notwendig ist. Um in diesem Bereich die Reibung zwischen dem Ventilelement 1 und dem Ventilgehäuse 4 im Zuge einer Bewegung des Ventilelements 1 möglichst gering zu halten, wird das Dichtelement 9 an einer Anlage mit seiner Dichtfläche 11 an der Oberfläche 2 des Ventilelements 1 gehindert. Dies ist vorliegend dadurch erreicht, dass sich der Spalt 12 ab einer vollständigen Freigabe des Leitungsquerschnitts 6 durch das Langloch 3 auf ein maximales Maß vergrößert hat, das das Dichtelement 9 nicht überbrücken kann. Konkret wird dies durch einen mechanischen Anschlag 17 seitens des Ventilgehäuses 4 erreicht, an dem das Dichtelement 9 mit einem ringförmigen Steg 18 zur Anlage kommt und an einem weiteren Folgen an der Oberfläche 2 gehindert wird.

Aufgrund des fehlenden Kontakts des Dichtelements 9 mit der Oberfläche 2 ab Überdeckung des Ventilelements 1 mit seiner auf die Abmessung 13 reduzierten Oberfläche 2 kann das Ventilelement 1 ohne Reibkontakt zum Ventilgehäuse 4 bewegt werden. Da in diesem Fall sowieso ein Strömen von Fluid zwischen dem Innenbereich des Ventilelements 1 und dem Leitungsquerschnitt 6 erwünscht ist, ist in diesem Bereich eine Abdichtung des Spalts über das Ventilelement 9 nicht notwendig.

Um ein Verkanten des Dichtelements 9 beim Abheben und auch beim Wiederanlegen an der Oberfläche 2 des Ventilelements 1 zu verhindern, ist die Oberfläche 2 des Ventilelements 1 mit Rampen 19, 20, 21 und 22 versehen, die jeweils seitlich zum Langloch 3 an der Oberfläche 2 des Ventilelements 1 ausgestaltet sind. Dabei reduzieren die Rampen 19 und 20 von der Kontur 15 und damit der Abmessung 16 auf den Grundkörper 14 und damit die Abmessung 13, während die Rampen 21 und 22 dann wieder eine Erstreckung des Ventilelements 1 in Richtung des Ventilgehäuses 4 entsprechend auf die Abmessung 16 vergrößern. Dabei beginnen die Rampen 19 und 20 ab Beginn einer Überschneidung des Langlochs 3 mit dem Leitungsquerschnitt 6 bis zur vollständigen Freigabe desselbigen durch das Langloch 3, während die Rampen 21 und 22 ab Ende der vollständigen Freigabe des Leitungsquerschnitts 6 durch das Langloch 3 bis hin zum Ende der Überschneidung zwischen Langloch 3 und Leitungsquerschnitt 6 an der Oberfläche 2 verlaufen. Steigungen der Rampen 19, 20 sowie der Rampen 21 und 22 sind dabei so zu wählen, dass es eben nicht zu einem Verkanten des Dichtelements 9 beim Abheben und auch bei der Wiederanlage an der Oberfläche 2 kommen kann.

In Figur 3 ist das Regelventil für eine Stellung des Ventilelements 1 zum Ventilgehäuse 4 dargestellt, in der das Langloch 3 noch nicht mit dem Leitungsquerschnitt 6 überdeckt. Dabei ist zu erkennen, dass das Dichtelement 9 mit seiner Dichtfläche 11 an der Oberfläche 2 des Ventilelements anliegt und somit den Spalt 12 entsprechend abdichtet. Dies ist dadurch erreicht, dass die Oberfläche 2 des Ventilelements 1 in dieser Position auf der Abmessung 16 liegt und der Spalt 12 in der Folge klein genug ist, so dass das Dichtelement 9 an der Oberfläche 2 anliegen kann. Infolge der Abdichtung und auch der fehlenden Überdeckung des Leitungsquerschnitts 6 mit dem Langloch 3 wird in diesem Fall ein Strömen von Fluid in den Leitungsquerschnitt 6 und damit zum Ablauf unterbunden.

Mittels der erfindungsgemäßen Ausgestaltung eines Regelventils können Reibungsverluste des Regelventils über dessen Arbeitsbereich reduziert werden.

### Bezugszeichenliste

- 1: Ventilelement
- 2: Oberfläche
- 3: Langloch
- 4: Ventilgehäuse
- 5: Rotationsachse
- 6: Leitungsquerschnitt
- 7: Stutzen
- 8: Raum
- 9: Dichtelement
- 10: Federelement
- 11: Dichtfläche
- 12: Spalt
- 13: Abmessung
- 14: Grundkörper
- 15: Kontur
- 16: Abmessung
- 17: Anschlag
- 18: Steg
- 19: Rampe
- 20: Rampe
- 21: Rampe
- 22: Rampe

## Patentansprüche

1. Regelventil zur Regelung eines Fluidflusses, umfassend ein Ventilgehäuse (4) und ein relativ dazu bewegbares Ventilelement (1) mit einem Durchbruch, der durch Bewegung des Ventilelements (1) in Überdeckung mit einem seitens des Ventilgehäuses (4) definierten Leitungsquerschnitt (6) bringbar ist, um den Fluidfluss zu ermöglichen, und ein Dichtelement (9), das am Ventilgehäuse (4) den Leitungsquerschnitt (6) radial umgebend aufgenommen und an einer Dichtfläche (11) mit einer Oberfläche (2) des Ventilelements (1) unter Überbrückung eines Spalts (12) in Kontakt bringbar ist, wobei die Erstreckung des Spalts (12) sich in Abhängigkeit der Position des Ventilelements (1) zum Ventilgehäuse (4) verändert und im Bereich der Überdeckung des Durchbruchs mit dem Leitungsquerschnitt (6) maximal wird und bei der maximalen Erstreckung des Spalts (12) das Dichtelement (9) mit seiner Dichtfläche (11) von der Oberfläche (2) des Ventilelements (1) abgehoben ist, **dadurch gekennzeichnet, dass** der Leitungsquerschnitt (6) durch einen Stutzen (7) des Ventilgehäuses (4) definiert ist und dass der Stutzen (7) und ein weiterer Teil des Ventilgehäuses (4) einen zwischenliegenden Raum (8) definieren, in dem ein das Dichtelement (9) in Richtung des Ventilelements (1) vorspannendes Federelement (10) aufgenommen ist, wobei ein mechanischer Anschlag (17) das Dichtelement (9) bei Vorliegen der maximalen Erstreckung des Spalts (12) an einer Anlage an der Oberfläche (2) des Ventilelements (1) hindert.

## Claims

1. Control valve for controlling a fluid flow, comprising a valve housing (4) and a valve element (1) which can be moved relative thereto, having an aperture which, by way of movement of the valve element (1), can be brought into congruence with a line cross section (6) which is defined on the part of the valve housing (4), in order to enable the fluid flow, and further comprising a sealing element (9) which is received on the valve housing (4) so as to surround the line cross section (6) radially and can be brought into contact on a sealing face (11) with a surface (2) of the valve element (1) with bridging of a gap (12), the extent of the gap (12) changing in a manner which is dependent on the position of the valve element (1) with respect to the valve housing (4), and reaching its maximum in the region of the congruence of the aperture with the line cross section (6), and, in the case of the maximum extent of the gap (12), the sealing element (9) with its sealing face (11) being lifted up from the surface (2) of the valve element (1), **characterized in that** the line cross section (6) is defined by way of a stub (7) of the valve housing (4), and **in that** the stub (7) and a further part of the valve housing (4) define a space (8) which lies in between and in which a sealing element (10) is received which prestresses the spring element (9) in the direction of the valve element (1), a mechanical stop (17) preventing the sealing element (9) from bearing against the surface (2) of the valve element (1) in the case of the presence of the maximum extent of the gap (12).

## Revendications

1. Soupape de régulation pour la régulation d'un écoulement de fluide, comprenant un boîtier de soupape (4) et un élément de soupape (1) déplaçable par rapport à celui-ci, avec un orifice qui peut être amené, par déplacement de l'élément de soupape (1), en coïncidence avec une section transversale de conduite (6) définie du côté du boîtier de soupape (4) afin de permettre l'écoulement de fluide, et un élément d'étanchéité (9) qui est reçu au niveau du boîtier de soupape (4) de manière à entourer radialement la section transversale de conduite (6) et qui peut être amené en contact au niveau d'une surface d'étanchéité (11) avec une surface (2) de l'élément de soupape (1) en surmontant une fente (12), l'étendue de la fente (12) variant en fonction de la position de l'élément de soupape (1) par rapport au boîtier de soupape (4) et étant maximale dans la région de la mise en coïncidence de l'orifice avec la section transversale de conduite (6), et dans le cas de l'étendue maximale de la fente (12), l'élément d'étanchéité (9) étant soulevé avec sa surface d'étanchéité (11) de la surface (2) de l'élément de soupape (1), **caractérisée en ce que** la section transversale de conduite (6) est définie par un embout (7) du boîtier de soupape (4) et **en ce que** l'embout (7) et une partie supplémentaire du boîtier de soupape (4) définissent un espace intermédiaire (8) dans lequel est reçu un élément de ressort (10) sollicitant l'élément d'étanchéité (9) dans la direction de l'élément de soupape (1), une butée mécanique (17) empêchant l'élément d'étanchéité (9), dans le cas de l'étendue maximale de la fente (12), de s'appliquer contre la surface (2) de l'élément de soupape (1).
